# EUROPÄISCHE PATENTSCHRIFT

(11) **EP 2 676 200 B1**
(45) Veröffentlichungstag und Bekanntmachung des Hinweises auf die Patenterteilung: **22.11.2017**
(21) Anmeldenummer: 12726574.2
(22) Anmeldetag: 16.02.2012
(51) Int. Cl.: G06F 11/20, G06F 11/07, B60K 26/04

(54) **HALBLEITERSCHALTKREIS UND VERFAHREN IN EINEM SICHERHEITSKONZEPT ZUM EINSATZ IN EINEM KRAFTFAHRZEUG**
SEMICONDUCTOR CIRCUIT AND METHOD IN A SAFETY CONCEPT FOR USE IN A MOTOR VEHICLE
CIRCUIT À SEMI-CONDUCTEURS ET PROCÉDÉ CONÇU COMME CONCEPT DE SÉCURITÉ UTILISÉS DANS UN VÉHICULE AUTOMOBILE

(30) Priorität: 18.02.2011 DE 102011011755
(43) Veröffentlichungstag der Anmeldung: 25.12.2013
(73) Patentinhaber: Conti Temic Microelectronic GmbH, 90411 Nürnberg (DE)
(72) Erfinder: NÄGELE, Volker, 78141 Schönwald (DE); PECHTOLD, Michael, 90765 Fürth (DE)
(74) Vertreter: Bonn, Roman Klemens
(86) Internationale Anmeldenummer: PCT/DE2012/100037
(87) Internationale Veröffentlichungsnummer: WO 2012/113385

(56) Entgegenhaltungen:
- DE-A1- 3 539 407
- DE-A1- 4 112 334
- DE-A1- 10 331 873
- GB-A- 2 104 247
- US-A1- 2010 162 042

## Beschreibung

Die Erfindung betrifft eine Halbleiterschaltkreis und ein Verfahren in einem Sicherheitskonzept zur Verwendung in einem Kraftfahrzeug nach den Oberbegriffen der unabhängigen Ansprüche.

Die DE 103 31 873 A1 beschreibt die Überwachung verteilter Software, die auf einer Anzahl von mindestens einem Steuergerät zugeordneten Recheneinheiten zur Ausführung kommt, wobei einer der Recheneinheiten ein Master-Modul und den anderen Recheneinheiten jeweils ein Slave-Modul zugewiesen wird und zur Überwachung zwischen dem Master-Modul und den Slave-Modulen eine Kommunikation im Master-Slave-Betrieb durchgeführt wird, bei dem die Kommunikation durchgeführt wird, indem die Slave-Module auf eine Anfrage des Master-Moduls entsprechende Antworten an das Master-Modul zurücksenden und diese Antworten zur Überprüfung eines einwandfreien Betriebs ausgewertet werden.

Es existieren verschiedene Konzepte, eine Funktionseinheit - zum Beispiel ein Steuergerät mit einem Hableiterschaltkreis - zum Einsatz in einem Kraftfahrzeug einzelsicherfrei bzw. eigensicher zu gestalten. Eine Möglichkeit, die Eigensicherheit eines Steuergerätes zu erreichen, ist die Überwachung im 3-Ebenen Konzept.

Aus der DE 44 38 714 A1 sind ein Verfahren und eine Vorrichtung zur Steuerung einer Antriebseinheit eines Fahrzeugs bekannt. Hierbei weist das Steuergerät zur Leistungssteuerung nur einen einzigen Mikrocontroller auf. Der Mikrocontroller führt sowohl die Steuerung als auch die Überwachung durch. Betriebssicherheit und Verfügbarkeit werden dabei dadurch sicher gestellt, dass zur Durchführung der Steuerung und der Überwachung wenigstens zwei voneinander unabhängige Ebenen in einem einzigen Mikrocontroller vorgesehen sind, wobei in einer ersten Ebene die Funktionen zur Leistungssteuerung bestimmt werden und in einer zweiten Ebene, insbesondere in Zusammenarbeit mit einem Überwachungsmodul, diese Funktionen und somit die Funktionsfähigkeit des Mikrocontrollers selbst überwacht werden.

Ferner wird in der DE 44 38 714 A1 eine dritte Ebene beschrieben, die eine Ablaufkontrolle der zweiten Ebene durchführt. Diese Überwachung durch die dritte Ebene steigert die Zuverlässigkeit und Verfügbarkeit des Steuergerätes erheblich.

Insbesondere wird im Überwachungsmodul die Ablaufkontrolle der zweiten Ebene als Frage-Antwort-Kommunikation ausgeführt.

Das 3-Ebenen-Überwachungskonzept (EGAS-Konzept) wird in der Regel bei Motorsteuergeräten von Fahrzeugen zur Überwachung elektronischer Motorsteuersysteme eingesetzt. Dabei besteht das Motorsteuergerät im wesentlichen aus dem sog. Funktionsrechner und dem Überwachungsrechner. Funktionsrechner und Überwachungsrechner kommunizieren über ein Frage-Antwort-Verfahren miteinander. Darüber hinaus verfügen sie über separate Abschaltpfade.

Die Ebene 1 umfasst das eigentliche Funktionsmodul zur Funktionssteuerung der Antriebseinheit des Fahrzeugs. Sie wird daher auch als Funktionsebene bezeichnet. Sie beinhaltet Motorsteuerungsfunktionen, u.a. zur Umsetzung der angeforderten Motormomente, Komponentenüberwachungen, die Diagnose der Ein- und Ausgangsgrößen, sowie die Steuerung der Systemreaktionen im erkannten Fehlerfall. Die Ebene 1 wird auf dem Funktionsrechner ausgeführt.

Die Ebene 2, auch als Funktions-Überwachungsebene bezeichnet, umfasst das Sicherheitsmodul und wird ebenfalls auf dem Funktionsrechner ausgeführt. Sie erkennt den fehlerhaften Ablauf überwachungsrelevanter Umfänge des Funktionsmoduls der Ebene 1, u. a. durch die Überwachung der berechneten Momente oder der Fahrzeugbeschleunigung. Im Fehlerfall erfolgt die Auslösung von Systemreaktionen. Die Ebene 2 wird in einem durch die Ebene 3 abgesicherten Hardwarebereich des Funktionsrechners durchgeführt.

Die Ebene 3, auch Rechner-Überwachungsebene genannt, umfasst das Überwachungsmodul auf einer unabhängigen Überwachungseinheit (ASIC oder µC) mit Befehlssatztest, Programmablaufkontrolle, A/D Wandler-Test sowie zyklische und vollständige Speichertests der Ebene 2. Die vom Funktionsrechner unabhängige Überwachungseinheit testet durch ein Frage-Antwort-Verfahren die ordnungsgemäße Abarbeitung der Programmbefehle des Funktionsrechners. Im Fehlerfall erfolgt die Auslösung von Systemreaktionen unabhängig vom Funktionsrechner.

Bei aktuellen elektronischen Motorsteuerungssystemen ist die gesamte Funktions- und Überwachungssoftware in einem Steuergerät integriert. Das Überwachungskonzept kann auch in anderen Fahrzeugsteuergeräten, insbesondere in Getriebesteuergeräten realisiert werden.

Bei diesem Sicherheitskonzept werden in aller Regel bei einem Fehler der zweiten Ebene die Aktuatoren mittels der leistungsbestimmenden Endstufen des Steuergeräts in einen stromlosen Zustand gebracht. Tritt ein Fehler in der dritten Ebene auf, werden in einem ersten Schritt die Aktuatoren mittels der leistungsbestimmenden Endstufen des Steuergeräts in einen stromlosen Zustand gebracht und danach in einem zweiten Schritt der Funktionsrechner durch die Überwachungseinheit (dritte Ebene) zurückgesetzt. Dieser stromlose Zustand ist in aller Regel der sichere Zustand des kompletten, gesteuerten Systems, insbesondere des automatischen Getriebes.
Das heißt in einem konkreten Fall für ein Getriebe mit einer Kupplung, die im drucklosen Zustand durch eine mechanische Federkraft geöffnet ist, dass im Notfall, wenn die leistungsbestimmenden Endstufen abgeschaltet sind, und das hydraulische System zur Betätigung der Kupplung nicht mehr zur Verfügung steht, dennoch der beabsichtigte Notfallzustand erreicht wird, weil die Kupplung durch die mechanische Federkraft dauerhaft im geöffneten Zustand gehalten wird und somit kein Moment vom Motor zu den Antriebsrädern übertragbar ist.

Es gibt jedoch Getriebetypen, in denen im strom- bzw. drucklosen Zustand die Kupplung gegen eine mechanische Federkraft geschlossen ist, so genannte" normally closed" Kupplungen, bei denen dieses Überwachungskonzept in der beschriebenen Form nicht angewendet werden kann.

Die dritte Ebene kann ein ASIC oder ein separater Mikrokontroller sein, der in erster Linie der Überwachung des Funktionsrechners dient. Der Datenaustausch für das Frage-Antwort-Verfahren geschieht in aller Regel über eine rechnerübliche Schnittstelle wie SPI (Serial Peripheral Interface).

Wird die dritte Ebene auf einem ASIC in der Funktion einer "Monitoring Unit" realisiert, können die Aktuatoren bei einem Fehler im Frage-Antwort-Verfahren nur in den einen Zustand gesteuert werden, dass die leistungsbestimmenden Endstufen in aller Regel stromlos geschaltet werden; es können keine Schaltsequenzen oder geregelte Aktuations-Abläufe bewerkstelligt werden. Wobei ein Aktuations-Ablauf darin bestehen kann, dass die Position eines Aktuators mittels eines entsprechenden Sensorsignals ermittelt und nach Bedarf verändert bzw. geregelt wird. Dies liegt daran, dass vom ASIC nur ein Schaltsignal ausgegeben werden kann, welches die Elektronik entsprechend beeinflusst, und es kann vom ASIC auch kein Sensorsignal verarbeitet und somit auch kein Steuersignal ausgegeben werden.

Wird die dritte Ebene auf einem zusätzlichen Rechner (µC) realisiert, kann bei einem Fehler im Frage-Antwort-Verfahren nicht absolut zweifelsfrei festgestellt werden, welcher der beiden Rechner, der "Fragende" oder der "Antwortende", wirklich fehlerhaft arbeitet. Deshalb müssen beide Rechner im Fehlerfall den sicheren Systemzustand (Endstufen stromlos) herstellen und zurückgesetzt werden. Das heißt, auch mit einem zweiten Rechner in der dritten Ebene können keine Schaltsequenzen oder geregelte Aktuations-Abläufe mehr im Fehlerfall ausgeführt werden.

In beiden Fällen ergibt sich der zusätzliche Nachteil, dass das Fahrzeug augenblicklich nur antriebslos geschaltet werden kann (Motor aus, Antriebsstrang offen = "Liegenbleiber") und aufgrund des Fehlens jeglicher Steuerfunktionen kein Notlauf (Motor an, beschränkte Momentenübertragung = "limp home mode") möglich ist.

Es stellt sich daher die Aufgabe, einen Halbleiterschaltkreis für ein elektronisches Steuergerät zum Einsatz in einem mechanisch nicht eigensicheren System in einem Kraftfahrzeug zu schaffen, das im Fehlerfall einen geregelten sicheren Notlauf bzw. zumindest einen sicheren Zustand, insbesondere den Zustand "Antriebsstrang offen" gewährleistet.

Erfindungsgemäß wird die Aufgabe gelöst durch einen Halbleiterschaltkreis mit den Merkmalen des unabhängigen Anspruchs 1.

Auf dem Halbleiterschaltkreis sind gemäß ISO 26262 der Funktionsrechner, die Überwachungseinheit und der Überwachungsrechner als unabhängige Bausteine getrennt voneinander angeordnet, vorzugsweise auf einem gemeinsamen Schaltungsträger. Für den Fall, dass der Überwachungsrechner aufgrund eines sicherheitsrelevanten Fehlers ausfällt, kann der Funktionsrechner die volle bzw. eine eingeschränkte Funktion des Halbleiterschaltkreises übernehmen. Für den anderen Fall, dass der Funktionsrechner ausfällt, ist wiederum der Überwachungsrechner in der Lage, die volle bzw. eine eingeschränkte Funktion des Halbleiterschaltkreises zu übernehmen. Dabei kann der eingeschränkte Zustand darin bestehen, dass der Antriebsstrang offen ist, bzw. dass ein Notlaufbetrieb mit eingeschränkter Momentenübertragung gewährleistet werden kann.

Das bedeutet, dass grundsätzlich ein oder beide Rechner die Möglichkeit haben, diese Funktion zu erfüllen. Das heißt, dass dadurch ganze oder teilweise Redundanz hergestellt ist. Im Fehlerfall gilt ein Rechner als funktionsfähig, während der andere im Resetzustand gehalten wird, weil dieser sicher als funktionsuntüchtig erkannt wurde.

Dadurch wird gewährleistet, dass zu jedem Betriebszeitpunkt, die Zustände des Antriebsstrangs durch wenigstens einen der beiden Rechner sicher erkannt werden und diese Informationen im System aus Hardware und Software verarbeitet werden, um den sicheren Zustand, entweder Antriebsstrang offen oder Notlaufbetrieb jederzeit sicherzustellen.

Ein weiterer Vorteil dieses Konzepts ist, dass applikationsabhängige, bestimmte Funktionalitäten vom Funktionsrechner auf den Überwachungsrechner ausgelagert werden können.

Ferner ist es möglich, bei Resourcenproblemen im Halbleiterschaltkreis Funktionsblöcke zwischen dem Funktionsrechner und dem Überwachungsrechner zu verschieben, um die maximale CPU-Last nicht zu überschreiten.

Um eine volle Redundanz zu erreichen, ist es auch möglich, die applikationsabhängigen Funktionalitäten sowohl im Funktionsrechner wie auch dem Überwachungsrechner vorzuhalten.

Ein weiterer Sicherheitsaspekt ist insbesondere die Tatsache, dass der Funktionsrechner und der Überwachungsrechner (UR) jeweils eine separate Spannungsversorgung aufweisen. Insbesondere während der Hochlaufphase der beiden Rechner wird durch eine geeignete Zeitsteuerung und Logik sichergestellt, dass ein sicherheitsrelevanter Fehler im System zum Auslösen einer jeweiligen Sicherheitsfunktion führt. Ein in der Spannungsversorgung des Überwachungsrechners integrierter Watchdog kann diesen zusätzlich in den Phasen überwachen, in denen der Überwachungsrechner nicht oder noch nicht durch den Funktionsrechner überwacht wird.

Eine weitere Aufgabe ist es, ein Verfahren für ein elektronisches Steuergerät zum Einsatz in einem mechanisch nicht eigensicheren System in einem Kraftfahrzeug zu schaffen, das im Fehlerfall einen geregelten sicheren Notlauf bzw. zumindest einen sicheren Zustand, insbesondere den Zustand "Antriebsstrang offen" gewährleistet.

Erfindungsgemäß wird diese Aufgabe gelöst durch ein Verfahren mit den Merkmalen der unabhängigen Ansprüche 4 und 5.

Bezüglich eines Verfahrens zur Überwachung des Halbleiterschaltkreises in dem elektronischen Steuergerät kann unterschieden werden zwischen einem Halbleiterschaltkreis mit einer einzigen Überwachungseinheit und einem Halbleiterschaltkreis mit mehr als einer Überwachungseinheit. Wobei im letzteren Fall die einzelnen Überwachungseinheiten auf einem einzigen elektronischen Baustein oder auf mehreren, getrennten Bausteinen angeordnet sein können.

Bei einem derartigen Verfahren werden zunächst die einzelnen Frage-Antwort-Verfahren zwischen den Rechnern untereinander, bzw. zwischen den Rechnern und den entsprechenden Überwachungseinheiten initialisiert.

Je nachdem, wo in dem Frage-Antwort-Verfahren ein Fehler auftritt, wird entweder der Überwachungsrechner zurückgesetzt und der Funktionsrechner übernimmt im Notfallbetrieb die Funktion des Halbleiterschaltkreises, oder umgekehrt. Solche Funktionen sind in aller Regel die, die zur Herstellung des sicheren Zustandes oder zur Durchführung eines Notlaufbetriebes ("Limp home") dienen. Der fehlerbehaftete Rechner wird so lange im Resetzustand gehalten, bis zum Beispiel ein Power-Up-Reset des Halbleiterschaltkreises stattgefunden hat. Durch die Verwendung von mehr als einer Überwachungseinheit werden zwar einerseits die Kosten erhöht, andererseits wird dadurch aber die Sicherheit des Systems gesteigert.

Insbesondere wird während der Hochlaufphase des Funktionsrechners und des Überwachungsrechners durch geeignete Zeitsteuerung, zum Beispiel Time-Outs, und Logik bzw. Software sichergestellt, dass ein in dieser Phase auftretender Fehler zum Auslösen der jeweiligen Sicherheitsfunktion führt. Ein in der Spannungsversorgung des Überwachungsrechners integrierter Watchdog kann diesen zusätzlich in den Phasen überwachen, in denen er durch den Funktionsrechner nicht oder noch nicht überwacht wird.

Vorteilhafterweise wird ein kontrollierter Nachlauf ("Shut-Down") des Halbleiterschaltkreises dadurch bewerkstelligt, dass in der Nachlaufphase der beiden Rechner eine kontrollierte Deaktivierungssequenz der Überwachung des Halbleiterschaltkreises bis zum Abschalten der jeweiligen Spannungsversorgung der beiden Rechner durchlaufen wird. So werden zum Beispiel alle aktiven Frage-Antwort-Verfahren solange weiter betrieben wird, bis der Funktionsrechner kurz vor dem Abschalten der Selbsthaltung sämtlicher Spannungsversorgungen steht.

Durch eine geeignete Systemarchitektur, bestehend aus Hardware und Software, wird mit diesem Konzept gewährleistet, dass zu jedem Betriebszeitpunkt, insbesondere in der Initialisierungsphase des Halbleiterschaltkreises die sicherheitsrelevanten Zustände des Antriebsstrangs durch wenigstens einen der beiden Rechner sicher erkannt werden und diese Informationen im System aus Hardware und Software verarbeitet werden, um im Fehlerfall einen sicheren Zustand des Fahrzeugs, d. h. entweder Antriebsstrang offen oder Notlauf, jederzeit zu gewährleisten.

In der nachfolgenden Beschreibung werden die Merkmale und Einzelheiten der Erfindung in Zusammenhang mit den beigefügten Zeichnungen anhand von Ausführungsbeispielen näher erläutert. Dabei sind in einzelnen Varianten beschriebene Merkmale und Zusammenhänge grundsätzlich auf alle Ausführungsbeispiele übertragbar.

In den Zeichnungen zeigen:
- Fig. 1: ein Blockschaltbild des Halbleiterschaltkreises mit einer Überwachungseinheit,
- Fig. 2: ein Blockschaltbild des Halbleiterschaltkreises mit zwei Überwachungseinheiten,
- Fig. 3: ein Flussdiagramm für ein Verfahren mit einer Überwachungseinheit,
- Fig. 4: ein Flussdiagramm für ein Verfahren mit zwei Überwachungseinheiten, und
- Fig. 5: ein Flussdiagramm für einen Ablauf, nach dem ein Rechner zurückgesetzt wird.

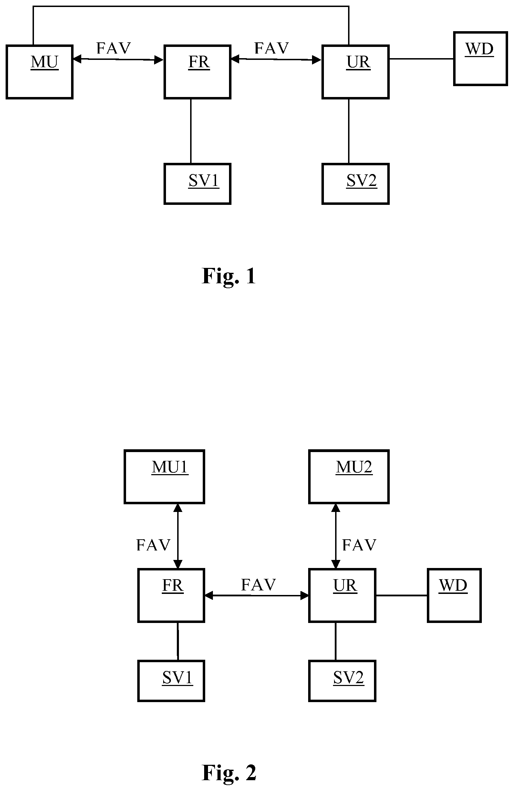

Fig. 1 zeigt ein Blockschaltbild des Halbleiterschaltkreises mit einem Funktionsrechner (FR), einem Überwachungsrechner (UR) und einer Überwachungseinheit (MU), die jeweils physikalisch unabhängig voneinander sind. Der Funktionsrechner (FR) regelt insbesondere den Normalbetrieb des Kraftfahrzeugs durch Ausführung wenigstens der Ebene 1 - und Ebene 2 - Funktionalität des bereits beschriebenen EGAS-Konzepts. Die Überwachungseinheit (MU) kann zumindest die Ebene 3 - Funktionalität des EGAS-Konzepts ausführen. Zudem steht die Überwachungseinheit (MU) in Signalverbindung mit dem Überwachungsrechner (UR). Sowohl zwischen Funktionsrechner (FR) und Überwachungsrechner (UR), als auch zwischen Funktionsrechner (FR) und Überwachungseinheit (MU) wird zur Überwachung ihrer jeweiligen korrekten Funktion ein Frage-Antwort-Verfahren (FAV) durch-geführt. Das ist in Fig. 1 durch die Doppelpfeile zwischen Funktionsrechner (FR) und Überwachungsrechner (UR) bzw. zwischen Funktionsrechner (FR) und Überwachungseinheit (MU) dargestellt.

Insbesondere beim Ausfall des Überwachungsrechners (UR) ist die volle oder eine eingeschränkte Funktion des Halbleiterschaltkreises durch den funktionsfähigen Funktionsrechner (FR) gewährleistet. Beim Ausfall des Funktionsrechners (FR) ist die volle oder eine eingeschränkte Funktion des Halbleiterschaltkreises vorteilhafterweise durch den funktionsfähigen Überwachungsrechner (UR) gewährleistbar.

Die Tatsache, dass der Funktionsrechner und der Überwachungsrechner (UR) jeweils eine separate Spannungsversorgung aufweisen, stellt einen weiteren Sicherheitsvorteil dar.

Ein insbesondere in der Spannungsversorgung (SV2) des Überwachungsrechners (UR) integrierter zusätzlicher Watchdog (WD) kann den Überwachungsrechner (UR) während der Hochlaufphase der beiden Rechner (FR, UR) überwachen, wenn der Überwachungsrechner (UR) nicht oder noch nicht durch den Funktionsrechner (FR) überwacht wird. Insbesondere während dieser Phase wird durch eine geeignete Zeitsteuerung und Logik sichergestellt, dass ein sicherheitsrelevanter Fehler im System zum Auslösen einer jeweiligen Sicherheitsfunktion führt.

Fig. 2 zeigt ein Blockschaltbild des Halbleiterschaltkreises aus Fig. 1, jedoch mit zwei Überwachungseinheiten (MU1, MU2). Dabei überwacht insbesondere die erste Überwachungseinheit (MU1) mittels eines Frage-Antwort-Verfahrens (FAV) die korrekte Funktion des Funktionsrechners (FR) und entsprechend die zweite Überwachungseinheit (MU2) die korrekte Funktion des Überwachungsrechners (UR). Der Funktionsrechner (FR) und der Überwachungsrechner (UR) stehen ebenfalls in Signalverbindung, zum Beispiel zur Durchführung eines Frage-Antwort-Verfahrens (FAV).

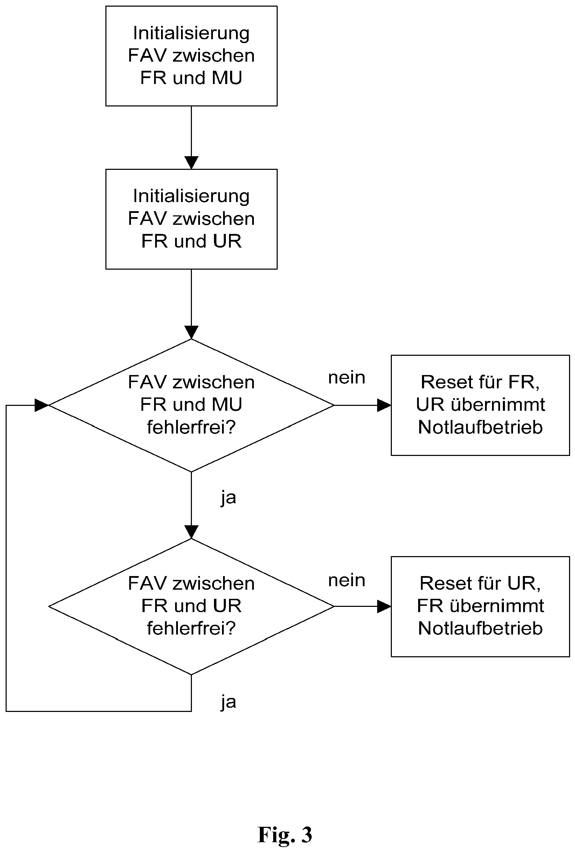

Fig. 3 zeigt ein Flussdiagramm für ein Verfahren zur Überwachung eines Halbleiterschaltkreises mit einer Überwachungseinheit (MU), die die korrekte Funktion des Funktionsrechners (FR) überwacht und auch in Signalverbindung mit dem Überwachungsrechner (UR) steht.

Zunächst werden die entsprechenden Frage-Antwort-Verfahren (FAV) zwischen dem Funktionsrechner (FR) und der Überwachungseinheit (MU) und zwischen dem Funktionsrechner (FR) und dem Überwachungsrechner (UR) initialisiert, wobei die beiden Frage-Antwort-Verfahren (FAV) nicht identisch sein müssen.

Für den Fall, dass das Frage-Antwort-Verfahren (FAV) zwischen Funktionsrechner (FR) und Überwachungseinheit (MU) fehlerfrei ist, jedoch das Frage-Antwort-Verfahren (FAV) zwischen dem Funktionsrechner (FR) und dem Überwachungsrechner (UR) Fehler aufweist, wird nach einem vorbestimmten fehlerabhängigen Ablauf der Überwachungsrechner außer Betrieb gesetzt und vom Funktionsrechner im Resetzustand gehalten. Der Funktionsrechner (FR) übernimmt dann die volle oder eine eingeschränkte Funktion des Halbleiterschaltkreises. Der Überwachungsrechner (UR) wird so lange im Resetzustand gehalten, bis zum Beispiel ein Power-Up-Reset des Halbleiterschaltkreises stattgefunden hat.

Für den Fall, dass das Frage-Antwort-Verfahren (FAV) zwischen dem Funktionsrechner (FR) und der Überwachungseinheit (MU) fehlerhaft ist, wird nach einem vorbestimmten fehlerabhängigen Ablauf der Funktionsrechner außer Betrieb gesetzt und vom Überwachungsrechner im Resetzustand gehalten. Der Überwachungsrechner (UR) übernimmt nun die volle bzw. eine eingeschränkte Funktion des Halbleiterschaltkreises. Der Funktionsrechner (FR) wird so lange im Resetzustand gehalten, bis zum Beispiel ein Power-Up-Reset des Halbleiterschaltkreises stattgefunden hat.

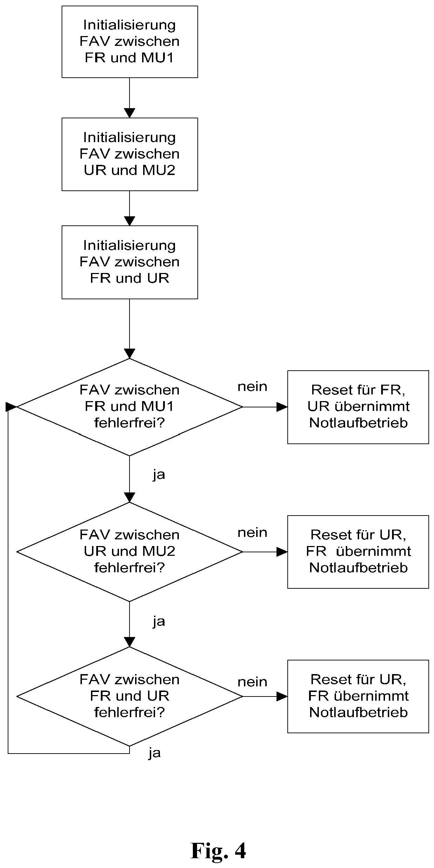

Fig. 4 zeigt ein Flussdiagramm für ein Verfahren zur Überwachung eines Halbleiterschaltkreises mit zwei Überwachungseinheiten (MU1, MU2), wobei die erste Überwachungseinheit (MU1) den Funktionsrechner (FR) und die zweite Überwachungseinheit (MU2) den Überwachungsrechner (UR) überwacht. Zunächst werden die entsprechenden Frage-Antwort-Verfahren (FAV) zwischen dem Funktionsrechner (FR) und der ersten Überwachungseinheit (MU1), zwischen dem Überwachungsrechner (UR) und der zweiten Überwachungseinheit (MU2) und zwischen dem Funktionsrechner (FR)und dem Überwachungsrechner (UR) initialisiert, wobei die jeweiligen Frage-Antwort-Verfahren (FAV) unterschiedlich sein können.

Für den Fall, dass das Frage-Antwort-Verfahren (FAV) zwischen Funktionsrechner (FR) und erster Überwachungseinheit (MU1) fehlerhaft ist, setzt insbesondere die erste Überwachungseinheit (MU1) nach einem vorbestimmten fehlerabhängigen Ablauf den Funktionsrechner (FR) zurück. Das Rücksetzsignal des Funktionsrechners (FR) wird durch den Überwachungsrechner (UR) eingelesen, und der Überwachungsrechner (UR) übernimmt die volle bzw. eingeschränkte Funktion des Halbleiterschaltkreises.

Für den Fall, dass das Frage-Antwort-Verfahren (FAV) zwischen Überwachungsrechner (UR) und zweiter Überwachungseinheit (MU2) fehlerhaft ist, setzt insbesondere die zweite Überwachungseinheit (MU2) nach einem vorbestimmten fehlerabhängigen Ablauf den Überwachungssrechner (UR) zurück. Dieses Rücksetzsignal wird vom Funktionsrechner (FR) eingelesen, und der Funktionsrechner (FR) übernimmt die volle bzw. eingeschränkte Funktion des Halbleiterschaltkreises.

Für den Fall, dass das Frage-Antwort-Verfahren (FAV) zwischen Funktionsrechner (FR) und Überwachungsrechner (UR) fehlerhaft ist, setzt insbesondere der Funktionsrechner (FR)den Überwachungsrechner (UR) nach einem vorbestimmten fehlerabhängigen Ablauf zurück. Der Funktionsrechner (FR) übernimmt dann vorteilhafterweise die volle bzw. eingeschränkte Funktion des Halbleiterschaltkreises. Es wäre auch denkbar, dass der Überwachungsrechner (UR) den Funktionsrechner (FR)zurücksetzt und dann die volle bzw. eingeschränkte Funktion des Halbleiterschaltkreises übernimmt. Nachfolgende Erläuterungen bertreffen Verfahren zur Überwachung eines Halbleiterschaltkreises sowohl mit einer als auch mit zwei Überwachungseinheiten (MU1, MU2).

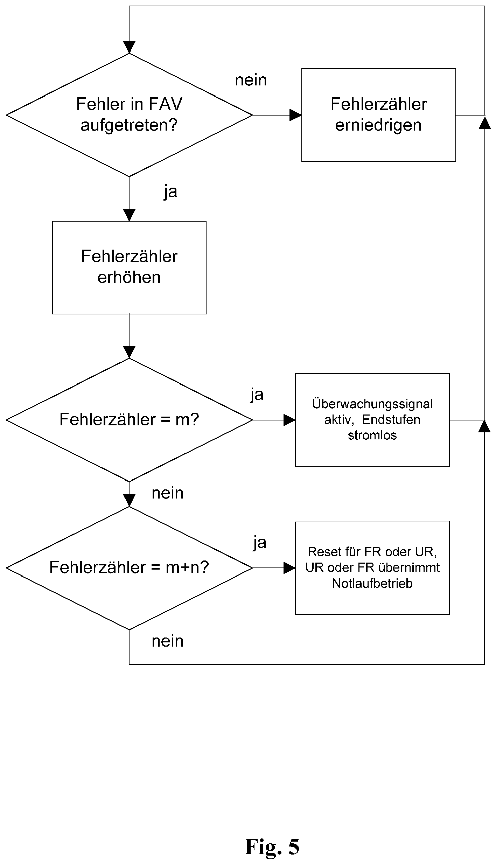

Ein Beispiel für einen vorbestimmten fehlerabhängigen Ablauf, nach dem ein Rechner (FR, UR) zurückgesetzt wird, ist in Fig. 5 beschrieben. Insbesondere kann der Ablauf derart sein, dass die überwachende/fragende Einheit (MU, FR, UR) nach m falschen Antworten zunächst ein Überwachungssignal aktiv schaltet, welches die kritischen Aktuator-Endstufen stromlos schaltet. Nach weiteren n falschen Antworten im Frage-Antwort-Verfahren (FAV) zwischen überwachender/fragender Einheit (MU, FR, UR) und überwachter/antwortender Einheit (FR, UR) setzt die überwachende/fragende Einheit (MU, FR, UR) die überwachte/antwortende Einheit (FR, UR) zurück. Vorteilafterweise nehmen m und n Werte zwischen 4 und 10 an. Der Zustand des Überwachungssignals und des Resetsignals kann von der noch funktionsfähigen Einheit (FR, UR) eingelesen und derart verwertet werden, dass diese funktionsfähige Einheit (FR, UR) die funktionsunfähige Einheit (FR, UR) im Resetzustand hält und entsprechende notwendige Maßnahmen ergreift, zum Beispiel die volle bzw. eine eingeschränkte Funktion des Halbleiterschaltkreises zu übernehmen, was zum Beispiel auch die Herstellung des sicheren Systemzustands sein kann.

Der jeweils fehlerbehaftete Rechner (FR, UR) wird so lange im Resetzustand gehalten, bis zum Beispiel ein Power-Up-Reset des Halbleiterschaltkreises stattgefunden hat. Durch die Verwendung von mehr als einer Überwachungseinheit wird die Systemsicherheit gesteigert.

Durch eine geeignete Initialisierungssequenz und eine zwingend unabhängige Spannungsversorgung für jeden Rechner (FR, UR) wird sichergestellt, dass eine gegenseitige Blockade der Rechner (FR, UR) oder eine zeitliche Überwachungslücke vermieden wird oder ein einfacher Fehler in der Spannungsversorgung nicht das gesamte System funktionsuntüchtig macht.

Insbesondere wird während der Hochlaufphase des Funktionsrechners (FR) und des Überwachungsrechners (UR) durch geeignete Zeitsteuerung, zum Beispiel Time-Outs, und Logik bzw. Software sichergestellt, dass ein in dieser Phase auftretender Fehler zum Auslösen der jeweiligen Sicherheitsfunktion führt. Ein in der Spannungsversorgung (SV1, SV2) integrierter Watchdog (WD) kann die Rechner (FR, UR) zusätzlich in den Phasen überwachen, in denen sie nicht oder noch nicht durch die Überwachungseinheiten (MU1, MU2) überwacht werden.

Vorteilhafterweise wird ein kontrollierter Nachlauf ("Shut-Down") des Halbleiterschaltkreises dadurch bewerkstelligt, dass in der Nachlaufphase der beiden Rechner (FR, UR) eine kontrollierte Deaktivierungssequenz der Überwachung des Halbleiterschaltkreises bis zum Abschalten der jeweiligen Spannungsversorgung (SV1, SV2) der beiden Rechner (FR, UR) durchlaufen wird. So werden zum Beispiel alle zu diesem Zeitpunkt aktiven Frage-Antwort-Verfahren (FAV) solange weiter betrieben, bis der Funktionsrechner (FR) kurz vor dem Abschalten der Selbsthaltung sämtlicher Spannungsversorgungen (SV1, SV2) steht.

Liegt demnach ein zu steuerndes, mechanisch nicht eigensicheres System vor, insbesondere ein Doppelkupplungsgetriebe mit wenigstens einer "normally closed" Kupplung, bei dem zur Herstellung des Notlaufzustandes oder sicheren Zustandes eine Schaltsequenz oder ein geregelter Ablauf bzw. aktiver Eingriff nötig ist, und soll dieser Ablauf bzw. diese Regelung durch einen Rechner erfolgen, dann muss sichergestellt sein, dass dieser Rechner auch voll funktionstüchtig ist. Ein derartiger Ablauf bzw. Eingriff kann z.B. ein geregeltes Bestromen eines Kupplungsventils oder ein elektrohydraulisches Auslegen einer Gangstufe sein.

Das bedeutet, dass grundsätzlich ein oder beide Rechner die Möglichkeit haben, diese Funktion zu erfüllen (ganze oder teilweise Redundanz) und dass im Fehlerfall dieser Rechner noch als funktionsfähig gelten muß, während der andere im Resetzustand gehalten wird, weil dieser sicher als funktionsuntüchtig erkannt wurde bzw. wird.

Durch eine geeignete Systemarchitektur, bestehend aus Hardware und Software, wird mit diesem Konzept gewährleistet, dass zu jedem Betriebszeitpunkt, insbesondere in der Initialisierungsphase des Halbleiterschaltkreises die sicherheitsrelevanten Zustände des Antriebsstrangs durch wenigstens einen der beiden Rechner sicher erkannt werden und diese Informationen im System aus Hardware und Software verarbeitet werden, um einen sicheren Zustand des Fahrzeugs, d. h. entweder Antriebsstrang offen oder Notlauf, jederzeit zu gewährleisten.

Ein weiterer Vorteil dieses Konzepts ist, dass applikationsabhängige, bestimmte Funktionalitäten vom Funktionsrechner auf den Überwachungsrechner ausgelagert werden können, speziell jene, die im Fehlerfall durch den Überwachungsrechner abgedeckt werden müssen.
Ferner ist es möglich, bei Resourcenproblemen Funktionsblöcke zwischen dem Funktionsrechner und dem Überwachungsrechner zu verschieben, um die maximale CPU-Last nicht zu überschreiten.

Um eine volle Redundanz zu erreichen, ist es auch möglich, die applikationsabhängigen Funktionalitäten sowohl im Funktionsrechner wie auch dem Überwachungsrechner vorzuhalten.

Die vorliegende Erfindung wurde anhand der vorstehenden Beschreibung so dargestellt, um das Prinzip der Erfindung und dessen praktische Anwendung bestmöglichst zu erklären. Jedoch lässt sich die Erfindung bei geeigneter Abwandlung selbstverständlich in zahlreichen anderen Ausführungsformen und Kombinationen realisieren.

## Patentansprüche

1. Halbleiterschaltkreis für ein elektronisches Steuergerät zum Einsatz in einem mechanisch nicht eigensicheren System in einem Kraftfahrzeug, umfassend
- einen Funktionsrechner (FR) zur Regelung des Normalbetriebs eines Kraftfahrzeugs durch Ausführung wenigstens der Ebene 1 - und Ebene 2 - Funktionalität des EGAS-Konzepts,
- wenigstens eine Überwachungseinheit (MU) zur Ausführung wenigstens der
Ebene 3 - Funktionalität des EGAS-Konzepts,
- einen Überwachungsrechner (UR), auf dem wenigstens ein Frage-Antwort-Verfahren (FAV) mit dem Funktionsrechner (FR) durchführbar ist,
wobei
- Funktionsrechner (FR), Überwachungseinheit (MU) und Überwachungsrechner (UR) physikalisch jeweils unabhängig voneinander sind, **dadurch gekennzeichnet, dass** beim Ausfall des Überwachungsrechners (UR) die volle oder eine eingeschränkte Funktion des Halbleiterschaltkreises durch den Funktionsrechner (FR) gewährleistet ist, oder
- beim Ausfall des Funktionsrechners (FR) die volle oder eine eingeschränkte Funktion des Halbleiterschaltkreises durch den Überwachungsrechner (UR) gewährleistet ist , wobei
- der Funktionsrechner (FR) und der Überwachungsrechner (UR) jeweils eine separate Spannungsversorgung (SV1, SV2) aufweisen, und
wobei
die Spannungsversorgung (SV2) des Überwachungsrechners (UR) einen Watchdog (WD) zur zusätzlichen Überwachung des Überwachungsrechners (UR) aufweist.

2. Halbleiterschaltkreis nach Anspruch 1, **dadurch gekennzeichnet, dass** die Spannungsversorgung (SV1) des Funktionsrechners (FR) einen Watchdog (WD) zur Überwachung des Funktionsrechners (FR) aufweist

3. Verfahren zur Überwachung eines Halbleiterschaltkreises gemäß Anspruch 1, wobei der Halbleiterschaltkreis genau eine Überwachungseinheit (MU) umfasst, mit den Schritten:
a. Initialisierung des Ebene-3 Frage-Antwort-Verfahrens zwischen der Überwachungseinheit (MU) und dem Funktionsrechner (FR),
b. Initialisierung des Frage-Antwort-Verfahrens (FAV) zwischen dem Funktionsrechner (FR) und dem Überwachungsrechner (UR),
c. Für den Fall, dass das Frage-Antwort-Verfahren (FAV) zwischen Funktionsrechner (FR) und Überwachungseinheit (MU) fehlerfrei, jedoch das Frage-Antwort-Verfahren zwischen Funktionsrechner (FR) und Überwachungsrechner (UR) fehlerhaft ist, setzt der Funktionsrechner (FR) den Überwachungsrechner (UR) nach einem vorbestimmten fehlerabhängigen Ablauf zurück und übernimmt die volle oder eine eingeschränkte Funktion des Halbleiterschaltkreises;
d. Für den Fall, dass das Frage-Antwort-Verfahren (FAV) zwischen Funktionsrechner (FR) und Überwachungs-einheit (MU) fehlerhaft ist, schaltet die Überwachungseinheit (MU) nach einem vorbestimmten fehlerabhängigen Ablauf zunächst ein Überwachungssignal aktiv und setzt anschließend den Funktionsrechner (FR) zurück, und der Überwachungsrechner (UR) führt folgende Schritte durch:
Einlesen des Überwachungssignals und des Rücksetzsignals des Funktionsrechners (FR), sowie Übernahme der vollen oder einer eingeschränkten Funktion des Halbleiterschaltkreises.

4. Verfahren zur Überwachung eines Halbleiterschaltkreises gemäß Anspruch 1, wobei der Halbleiterschaltkreis mehr als eine Überwachungseinheit (MU1, MU2) umfasst, mit den Schritten:
a. Initialisierung des Ebene-3 Frage-Antwort-Verfahrens (FAV) zwischen der ersten Überwachungseinheit (MU1) und dem Funktionsrechner (FR),
b. Initialisierung eines Frage-Antwort-Verfahrens zwischen der zweiten Überwachungseinheit (MU2) und dem Überwachungsrechner (UR),
c. Initialisierung des Frage-Antwort-Verfahrens (FAV) zwischen dem Funktionsrechner (FR) und dem Überwachungsrechner (UR)
d. Für den Fall, dass das Frage-Antwort-Verfahren zwischen Funktionsrechner (FR) und erster Überwachungseinheit (MU1) fehlerhaft ist, schaltet die Überwachungseinheit (MU1) nach einem vorbestimmten fehlerabhängigen Ablauf zunächst ein Überwachungssignal aktiv und setzt anschließend den Funktionsrechner (FR) zurück, und der Überwachungsrechner führt folgende Schritte aus:
Einlesen des Überwachungs- und Rücksetzsignals des Funktionsrechners (FR) sowie Übernahme der vollen oder einer eingeschränkte Funktion des Halbleiterschaltkreises;
e. Für den Fall, dass das Frage-Antwort-Verfahren zwischen Überwachungsrechner (UR) und zweiter Überwachungseinheit (MU2) fehlerhaft ist, schaltet die zweite Überwachungseinheit (MU2) nach einem vorbestimmten fehlerabhängigen Ablauf zunächst ein Überwachungssignal aktiv und setzt anschließend den Überwachungssrechner (UR) zurück, und der Funktionsrechner (FR) führt folgende Schritte aus:
Einlesen des Überwachungs- und Rücksetzsignals des Überwachungsrechner (UR), sowie Übernahme der vollen oder einer eingeschränkten Funktion des Halbleiterschaltkreises;
f. Für den Fall, dass das Frage-Antwort-Verfahren (FAV) zwischen Funktionsrechner (FR) und Überwachungsrechner (UR) fehlerhaft ist, setzt anschließend der Funktionsrechner (FR) den Überwachungsrechner (UR) nach einem vorbestimmten fehlerabhängigen Ablauf zurück und übernimmt die volle oder eine eingeschränkte, Funktion des Halbleiterschaltkreises.

5. Verfahren nach Anspruch 3 oder 4, **dadurch gekennzeichnet, dass** ein vorbestimmter fehlerabhängiger Ablauf, nach dem zunächst ein Überwachungssignal aktiv geschaltet und anschließend
ein Rechner (FR, UR) zurückgesetzt wird, die Schritte umfasst:
a. die überwachende, fragende Einheit (MU, FR, UR) schaltet nach m falschen Antworten zunächst ein Überwachungssignal aktiv, welches die kritischen Aktuator-Endstufen stromlos schaltet,
b. Nach weiteren n falschen Antworten im Frage-Antwort-Verfahren zwischen überwachender, fragender Einheit (MU, FR, UR) und überwachter, antwortender Einheit (FR, UR) setzt die überwachende, fragende Einheit (MU, FR, UR) die überwachte, antwortende Einheit (FR, UR) zurück.

6. Verfahren nach Anspruch 3, 4 oder 5 , **dadurch gekennzeichnet, dass** während der Hochlaufphase der Rechner (FR, UR) durch geeignete Zeitsteuerung und Logik bzw. Software sichergestellt wird, dass im Fehlerfall eine jeweilige Sicherheitsfunktion ausgelöst wird.

7. Verfahren nach einem der Ansprüche 3 bis 6 , **dadurch gekennzeichnet, dass** ein kontrollierter Nachlauf ("Shut-Down") des Halbleiterschaltkreises dadurch bewerkstelligt wird, dass in der Nachlaufphase der Rechner (FR, UR) eine kontrollierte Deaktivierungssequenz der Überwachung bis zum Abschalten der Spannungsversorgung (SV1, SV2) durchlaufen wird.

8. Verfahren nach Anspruch 7 , **dadurch gekennzeichnet, dass** alle aktiven Frage-Antwort-Verfahren solange weiter betrieben werden, bis der Funktionsrechner (FR) kurz vor dem Abschalten der Selbsthaltung sämtlicher Spannungsversorgungen (SV1, SV2) steht.

9. Verfahren nach einem der Ansprüche 3 bis 8 , **dadurch gekennzeichnet, dass** ein in der Spannungsversorgung (SV2) des Überwachungsrechners (UR) integrierter Watchdog (WD) den Überwachungsrechner (UR) in den Phasen überwacht, in denen der Überwachungsrechner noch nicht durch den Funktionsrechner überwacht wird.

10. Verfahren nach einem der Ansprüche 3 bis 8 , **dadurch gekennzeichnet, dass** ein in den Spannungsversorgungen (SV1, SV2) der Rechner (FR, UR) integrierter Watchdog (WD) die Rechner (FR, UR) zusätzlich in den Phasen überwacht, in denen sie nicht oder noch nicht durch die Überwachungseinheiten (MU1, MU2) überwacht werden.

## Claims

1. Semiconductor circuit for an electronic control unit for use in a system which is not mechanically inherently secure in a motor vehicle, comprising
- a function computer (FR) for regulating the normal operation of a motor vehicle by carrying out at least the level 1 and level 2 functionality of the EGAS concept,
- at least one monitoring unit (MU) for executing at least the level 3 functionality of the EGAS concept,
- a monitoring computer (UR) on which at least one query/response procedure (FAV) can be carried out with the function computer (FR),
wherein
- function computer (FR), monitoring unit (MU) and monitoring computer (UR) are each physically independent of one another, **characterized in that** when the monitoring computer (UR) fails the entire function or a restricted function of the semiconductor circuit is ensured by the function computer (FR), or
- when the function computer (FR) fails the entire function or a restricted function of the semiconductor circuit is ensured by the monitoring computer (UR), wherein
- the function computer (FR) and the monitoring computer (UR) each have a separate voltage supply (SV1, SV2), and
wherein
the voltage supply (SV2) of the monitoring computer (UR) has a watchdog (WD) for additionally monitoring the monitoring computer (UR).

2. Semiconductor circuit according to Claim 1, **characterized in that** the voltage supply (SV1) of the function computer (FR) has a watchdog (WD) for monitoring the function computer (FR).

3. Method for monitoring a semiconductor circuit according to Claim 1, wherein the semiconductor circuit comprises precisely one monitoring unit (MU), comprising the steps:
a. initialization of the level 3 query/response procedure between the monitoring unit (MU) and the function computer (FR),
b. initialization of the query/response procedure (FAV) between the function computer (FR) and the monitoring computer (UR),
c. if the query/response procedure (FAV) between the function computer (FR) and monitoring unit (MU) is free of faults but the query/response procedure between the function computer (FR) and the monitoring computer (UR) is faulty, the function computer (FR) resets the monitoring computer (UR) after a predetermined fault-dependent sequence and takes over the performance of the full function or a restricted function of the semiconductor circuit;
d. if the query/response procedure (FAV) between the function computer (FR) and monitoring unit (MU) is faulty, the monitoring unit (MU) firstly activates a monitoring signal after a predetermined fault-dependent sequence and subsequently resets the function computer (FR), and the monitoring computer (UR) carries out the following steps:
reading in the monitoring signal and the resetting signal of the function computer (FR), and
taking over the performance of the full function or a restricted function of the semiconductor circuit.

4. Method for monitoring a semiconductor circuit according to Claim 1, wherein the semiconductor circuit comprises more than one monitoring unit (MU1, MU2), comprising the steps:
a. initializing the level 3 query/response procedure (FAV) between the first monitoring unit (MU1) and the function computer (FR),
b. initializing a query/response procedure between the second monitoring unit (MU2) and the monitoring computer (UR),
c. initializing the query/response procedure (FAV) between the function computer (FR) and the monitoring computer (UR),
d. if the query/response procedure between the function computer (FR) and the first monitoring unit (MU1) is faulty, the monitoring unit (MU1) firstly activates a monitoring signal after a predetermined fault-dependent sequence and subsequently resets the function computer (FR), and the monitoring computer carries out the following steps:
reading in the monitoring signal and resetting signal of the function computer (FR), and
taking over the performance of the full function or a restricted function of the semiconductor circuit;
e. if the query/response procedure between the monitoring computer (UR) and second monitoring unit (MU2) is faulty, the second monitoring unit (MU2) firstly activates a monitoring signal after a predetermined fault-dependent sequence and subsequently resets the monitoring computer (UR) and the function computer (FR) carries out the following steps:
reading in the monitoring signal and resetting signal of the monitoring computer (UR), and
taking over the performance of the full function or a restricted function of the semiconductor circuit;
f. if the query/response procedure (FAV) between the function computer (FR) and monitoring computer (UR) is faulty, the function computer (FR) subsequently resets the monitoring computer (UR) after a predetermined fault-dependent sequence and takes over the performance of the full function or a restricted function of the semiconductor circuit.

5. Method according to Claim 3 or 4, **characterized in that** a predetermined fault-dependent sequence after which a monitoring signal is firstly activated and subsequently a computer (FR, UR) is reset, comprises the steps:
a.the monitoring, querying unit (MU, FR, UR) firstly activates a monitoring signal after m incorrect responses, which monitoring signal deactivates the critical actuator output stages,
b. after further n incorrect responses in the query/response procedure between the monitoring, querying unit (MU, FR, UR) and monitored, responding unit (FR, UR) the monitoring, querying unit (MU, FR, UR) resets the monitored, responding unit (FR, UR).

6. Method according to Claim 3, 4 or 5, **characterized in that** during the running-up phase the computer (FR, UR) is protected by suitable timing and logic and software, **in that** in the case of a fault, a respective security function is triggered.

7. Method according to one of Claims 3 to 6, **characterized in that** a controlled shut-down of the semiconductor circuit is brought about by virtue of the fact that in the shut-down phase the computer (FR, UR) will run through a controlled deactivation sequence of the monitoring until the supply voltage (SV1, SV2) is switched off.

8. Method according to Claim 7, **characterized in that** all the active query/response procedures continue to be operated until the function computer (FR) is just about to switch off the self-locking of all voltage supplies (SV1, SV2).

9. Method according to one of Claims 3 to 8, **characterized in that** a watchdog (WD) which is integrated in the voltage supply (SV2) of the monitoring computer (UR) monitors the monitoring computer (UR) in the phases in which the monitoring computer is not yet monitored by the function computer.

10. Method according to one of Claims 3 to 8, **characterized in that** a watchdog (WD) which is integrated in the voltage supplies (SV1, SV2) of the computers (FR, UR) additionally monitors the computers (FR, UR) in the phases in which they are not monitored, or not yet monitored, by the monitoring units (MU1, MU2).

## Revendications

1. Circuit à semi-conducteur pour appareil de commande électronique destiné à être utilisé dans un système mécanique qui n'est pas à sécurité intégrée dans un véhicule automobile, comprenant
- un calculateur de fonction (FR) destiné à réguler le fonctionnement normal d'un véhicule automobile par exécution d'au moins la fonctionnalité du plan 1 et du plan 2 du concept EGAS,
- au moins une unité de surveillance (MU) destinée à mettre en oeuvre au moins la fonctionnalité du plan 3 du concept EGAS,
- un calculateur de surveillance (UR) sur lequel peut être exécuté au moins un processus de questions-réponses (FAV) au moyen du calculateur de fonction (FR),
dans lequel
- le calculateur de fonction (FR), l'unité de surveillance (MU) et le calculateur de surveillance (UR) sont respectivement physiquement indépendants les uns des autres, **caractérisé en ce que**, en cas de panne du calculateur de surveillance (UR), la totalité de la fonction ou une fonction limitée du circuit à semi-conducteur est assurée par le calculateur de fonction (FR), ou
- en cas de panne du calculateur de fonction (FR), la totalité de la fonction ou une fonction limitée du circuit à semi-conducteur est assurée par le calculateur de surveillance (UR), dans lequel
- le calculateur de fonction (FR) et le calculateur de surveillance (UR) comportent respectivement une alimentation en tension séparée (SV1, SV2), et
dans lequel
l'alimentation en tension (SV2) du calculateur de surveillance (UR) comporte un dispositif de surveillance (WD) permettant une surveillance supplémentaire du calculateur de surveillance (UR).

2. Circuit à semi-conducteur selon la revendication 1, **caractérisé en ce que** l'alimentation en tension (SV1) du calculateur de fonction (FR) comporte un dispositif de surveillance (WD) destiné à surveiller le calculateur de fonction (FR).

3. Procédé de surveillance d'un circuit à semi-conducteur selon la revendication 1, dans lequel le circuit à semi-conducteur comprend une seule unité de surveillance (MU), comprenant les étapes consistant à :
a) initialiser le processus de questions-réponses du plan 3 entre l'unité de surveillance (MU) et le calculateur de fonction (FR),
b) initialiser le processus de questions-réponses (FAV) entre le calculateur de fonction (FR) et le calculateur de surveillance (UR),
c) dans le cas où le processus de questions-réponses (FAV) entre le calculateur de fonction (FR) et l'unité de surveillance (MU) n'indique aucune erreur, mais où le processus de questions-réponses entre le calculateur de fonction (FR) et le calculateur de surveillance (UR) indique une erreur, le calculateur de fonction (FR) réinitialise le calculateur de surveillance (UR) selon une séquence prédéterminée dépendant de l'erreur et reprend la totalité de la fonction ou une partie limitée de la fonction du circuit à semi-conducteur ;
d) dans le cas où le processus de questions-réponses (FAV) entre le calculateur de fonction (FR) et l'unité de surveillance (MU) indique une erreur, l'unité de surveillance (MU) fait passer en premier lieu un signal de surveillance à l'état actif sur une séquence prédéterminée dépendant de l'erreur et réinitialise ensuite le calculateur de fonction (FR), et le calculateur de surveillance (UR) exécute les étapes suivantes consistant à :
lire en entrée le signal de surveillance et le signal de réinitialisation du calculateur de fonction (FR), et
reprendre la totalité de la fonction ou une partie limitée de la fonction du circuit à semi-conducteur.

4. Procédé de surveillance d'un circuit à semi-conducteur selon la revendication 1, dans lequel le circuit à semi-conducteur comprend plus d'une unité de surveillance (MU1, MU2), comprenant les étapes consistant à :
a) initialiser le processus de questions-réponses (FAV) du plan 3 entre la première unité de surveillance (MU1) et le calculateur de fonction (FR),
b) initialiser un processus de questions-réponses entre la deuxième unité de contrôle (MU2) et le calculateur de surveillance (UR),
c) initialiser le processus de questions-réponses (FAV) entre le calculateur de fonction (FR) et le calculateur de surveillance (UR),
d) dans le cas où le processus de questions-réponses entre le calculateur de fonction (FR) et la première unité de surveillance (MU1) indique une erreur, l'unité de surveillance (MU1) fait passer en premier lieu un signal de surveillance à l'état actif selon une séquence prédéterminée dépendant de l'erreur et réinitialise ensuite le calculateur de fonction (FR), et le calculateur de surveillance exécute les étapes consistant à :
lire en entrée le signal de surveillance et de réinitialisation du calculateur de fonction (FR) et
reprendre la totalité de la fonction ou une partie limitée de la fonction du circuit à semi-conducteur ;
e) dans le cas où le processus de questions-réponses entre le calculateur de surveillance (UR) et la deuxième unité de surveillance (MU2) indique une erreur, la deuxième unité de surveillance (MU2) fait passer en premier lieu un signal de surveillance à l'état actif selon une séquence prédéterminée dépendant de l'erreur et réinitialise ensuite le calculateur de fonction (FR) et le calculateur de surveillance (UR), et le calculateur de fonction (FR) exécute les étapes consistant à :
lire en entrée le signal de surveillance et de réinitialisation du calculateur de surveillance (UR), et
reprendre la totalité de la fonction ou une partie limitée de la fonction du circuit à semi-conducteur ;
f) dans le cas où le processus de questions-réponses (FAV) entre le calculateur de fonction (FR) et le calculateur de surveillance (UR) indique une erreur, le calculateur de fonction (FR) réinitialise ensuite le calculateur de surveillance (UR) selon une séquence prédéterminée dépendant de l'erreur et reprend la totalité de la fonction ou une partie limitée de la fonction du circuit à semi-conducteur.

5. Procédé selon la revendication 3 ou 4, **caractérisé en ce qu'**une séquence prédéterminée dépendant de l'erreur conformément à laquelle un signal de surveillance est tout d'abord amené à passer à l'état actif, puis un calculateur (FR, UR) est réinitialisé, comprend les étapes suivantes :
a) l'unité de surveillance émettant la question (MU, FR, UR) fait passer en premier lieu, après m réponses erronées, un signal de surveillance à l'état actif qui interrompt l'alimentation en courant des derniers étages critiques d'un actionneur,
b) après n autres réponses erronées se produisant lors du processus de questions-réponses entre l'unité de surveillance émettant la question (MU, FR, UR) et l'unité de surveillance émettant la réponse (FR, UR), l'unité de surveillance émettant la réponse (MU, FR, UR) réinitialise l'unité de surveillance émettant la réponse (FR, UR).

6. Procédé selon la revendication 3, 4 ou 5, **caractérisé en ce que**, pendant la phase de lancement, le calculateur (FR, UR) est sécurisé par une commande temporelle et logique ou des logiciels appropriés de manière à ce qu'une fonction de sécurité respective soit déclenchée en cas d'erreur.

7. Procédé selon l'une quelconque des revendications 3 à 6, **caractérisé en ce qu'**un processus d'arrêt ("Shut-Down") contrôlé du circuit à semi-conducteur est réalisé de manière à ce que, lors de la phase d'arrêt, le calculateur (FR, UR) exécute une séquence de désactivation contrôlée du surveillance jusqu'à la désactivation de l'alimentation en tension (SV1, SV2).

8. Procédé selon la revendication 7, **caractérisé en ce que** tous les processus de questions-réponses actifs sont poursuivis jusqu'à ce que le calculateur de fonction (FR) se trouve immédiatement avant la désactivation de l'auto-entretien de toutes les alimentations en tension (SV1, SV2).

9. Procédé selon l'une quelconque des revendications 3 à 8, **caractérisé en ce qu'**un dispositif de surveillance (WD) intégré à l'alimentation en tension (SV2) du calculateur de surveillance (UR) surveille le calculateur de surveillance (UR) au cours des phases lors desquelles le calculateur de surveillance n'est pas encore surveillé par le calculateur de fonction.

10. Procédé selon l'une quelconque des revendications 3 à 8, **caractérisé en ce qu'**un dispositif de surveillance (WD) intégré aux alimentations en tension (SV1, SV2) du calculateur (FR, UR) surveille en outre les calculateurs (FR, UR) au cours des phases lors desquelles ils ne sont pas ou pas encore surveillés par les unités de surveillance (MU1, MU2).
